# EUROPEAN PATENT APPLICATION

(11) **EP 2 237 241 A2**
(43) Date of publication of application: **06.10.2010**
(21) Application number: 10154197.7
(22) Date of filing: 22.02.2010
(51) Int. Cl.: G08G 1/0967

(54) **Vehicle operation diagnosis device, vehicle operation diagnosis method, and computer program**

(30) Priority: 30.03.2009 JP 2009083085
(71) Applicant: AISIN AW CO., LTD., Anjo-shi, Aichi-ken 444-1192 (JP)
(72) Inventor: Miura, Naoki, Anjo-shi, Aichi-ken 444-1192 (JP); Aoyama, Shingo, Anjo-shi, Aichi-ken 444-1192 (JP)
(74) Representative: Intes, Didier Gérard André

(57) **Abstract**

A vehicle operation diagnosis device (1) that diagnoses a driver's operation of a vehicle based on a vehicle parameter and a driving diagnosis judgment standard that is set for a diagnosis item, the vehicle operation diagnosis device being characterized by comprising:
a factor acquisition unit that acquires information that pertains to an accident factor for a high-accident location in the vicinity of the vehicle where not less than a specified number of accidents have occurred in the past;
a diagnosis judgment standard modification unit that, in a case where the vehicle is traveling in the high-accident location, modifies the driving diagnosis judgment standard based on the accident factor for the high-accident location;
a parameter acquisition unit (13) that acquires the vehicle parameter; and
a vehicle operation diagnosis unit (32) that diagnoses the driver's operation of the vehicle based on the driving diagnosis judgment standard that was modified by the diagnosis judgment standard modification unit and on the vehicle parameter that was acquired by the parameter acquisition unit.

## Description

The disclosure of Japanese Patent Application No. 2009-083085 filed on March 30, 2009, including the specification, drawings and abstract is incorporated herein by reference in its entirety.

### BACKGROUND OF THE INVENTION

### 1. Field of the Invention

The present invention relates to a vehicle operation diagnosis device, a vehicle operation diagnosis method, and a computer program that diagnose operation of a vehicle by a driver.

### 2. Description of the Related Art

In recent years, systems have become known that diagnose whether a driver's operation of a vehicle while driving is appropriate or not in terms of safety, in order to improve the driver's safe driving skills and to encourage the driver's interest in safe driving. For example, in Japanese Patent Application Publication No. JP-A-2007-293626, a system is described that determines whether or not a user is performing safe driving, based on diagnosis judgment standards that are set for a plurality of diagnosis items, such as an inter-vehicular distance, a speed limit, a temporary stop, a deceleration before a curve, and the like. In a case where it is determined that the user is performing safe driving, the system assigns a point value.

Furthermore, by referring to a result of the system's diagnosis, the driver can learn the characteristics of his own vehicle operation and what sorts of vehicle operation are appropriate under various circumstances. The driver can then perform safer and more appropriate vehicle operation by correcting the way he operates the brakes, the accelerator, the steering wheel, and the like based on what he has learned. The system can also give the driver motivation to continue driving safely.

### SUMMARY OF THE INVENTION

In the system that is described in Japanese Patent Application Publication No. JP-A-2007-293626, for any one diagnosis item, the diagnosis is always performed on the basis of the same diagnosis judgment standard. For example, for a diagnosis item that pertains to traversing a curve, the diagnosis is performed on the basis of the same driving diagnosis judgment standard (for example, the vehicle speed at the starting point of the curve is not greater than 20 km/h, the vehicle speed while traversing the curve is not greater than 15 km/h, the lateral acceleration while traversing the curve is not greater than 0.4 G, or the like), no matter where the curve that the vehicle is traversing (the diagnosis target area) is located on the map. However, in some cases in which the diagnosis target area where the vehicle is traveling satisfies a fixed condition, it is better to change the driving diagnosis judgment standard, as described below.

Furthermore, in recent years, navigation devices store map information on high-accident locations where accidents have occurred at least a specified number of times in the past and provide guidance in a case where the vehicle approaches a high-accident location. Because the risk is greater when traveling through a diagnosis target area that includes a high-accident location than it is when traveling through other diagnosis target areas, it is desirable to change the driving diagnosis judgment standard.

In a high-accident location, a variety of accident factors are present, depending on the shape of the road and the surrounding circumstances. For example, in a high-accident location on a curve, accident factors such as (1) a person or vehicle suddenly coming out from the side, (2) excessive speed when entering the curve, (3) a collision with a stopped vehicle after traversing the curve, and the like may be present. The points that should be the focus of attention in a high-accident location vary for each of the accident factors. For example, in a high-accident location where a cause of accidents is (1) a person or vehicle suddenly coming out from the side, attention should be focused on the angular velocity of the vehicle when it traverses the curve. In a high-accident location where a cause of accidents is (2) excessive speed when entering the curve, attention should be focused on the vehicle speed at the starting point of the curve. In a high-accident location where a cause of accidents is (3) a collision with a stopped vehicle after traversing the curve, attention should be focused on the speed of the vehicle when it traverses the curve. Therefore, for a high-accident location, it is desirable to vary the driving diagnosis judgment standards based on the points that should be the focus of attention for each of the accident factors, rather than changing all of the diagnosis judgment standards uniformly.

The present invention was devised to address the known problems described above and provides a vehicle operation diagnosis device, a vehicle operation diagnosis method, and a computer program that are capable of allowing the driver to operate the vehicle in a highly safe manner by adapting to the circumstances of various roads, because, in a case where the vehicle drives through a high-accident location, the vehicle operation diagnosis device, the vehicle operation diagnosis method, and the computer program vary the driving diagnosis judgment standards based on the accident factors in the high-accident location. The vehicle operation diagnosis device, the vehicle operation diagnosis method, and the computer program are also capable of giving the driver motivation to continue driving safely.

With a vehicle operation diagnosis device according to a first aspect, in a case where a vehicle is traveling in a high-accident location, a driving diagnosis judgment standard is modified based on an accident factor for the high-accident location, thus making it possible to cause a driver to perform highly safe vehicle operation in accordance with the circumstances on various roads. It is also possible to give the driver motivation to continue driving safely.

Further, with a vehicle operation diagnosis device according to a second aspect, the driving diagnosis judgment standard is modified by changing the threshold value of the parameter that pertains to the accident factor, so it is possible, for example, to facilitate the determination of a strict diagnosis result with respect to a vehicle operation to which particular attention should be paid while driving on various roads, and it is also possible to guide the driver toward a vehicle operation that will prevent something from occurring that might become an accident factor.

Furthermore, with a vehicle operation diagnosis device according to a third aspect, in a case where the driving diagnosis judgment standards are modified, the threshold value of the parameter that pertains to the accident factor for the high-accident location is changed to a value that is more readily attainable than the value in a case where the vehicle is not traveling in a high-accident location. This makes it more likely that a strict diagnosis result will be determined for a dangerous area that includes the high-accident location, making it possible to encourage the driver more strongly to drive safely.

In addition, with a vehicle operation diagnosis device according to a fourth aspect, the diagnosis result is provided as guidance to the driver, so it is possible to make the driver more conscious of highly safe vehicle operation and to give the driver motivation to continue driving safely.

Moreover, with a vehicle operation diagnosis method according to a fifth aspect, in a case where the vehicle is traveling in the high-accident location, the driving diagnosis judgment standard is modified based on the accident factor for the high-accident location, thus making it possible to cause the driver to perform highly safe vehicle operation in accordance with the circumstances on various roads. It is also possible to give the driver motivation to continue driving safely.

Finally, with a computer program according to a sixth aspect, in a case where the vehicle is traveling in the high-accident location, the driving diagnosis judgment standard is modified based on the accident factor for the high-accident location, thus making it possible to cause the driver to perform highly safe vehicle operation in accordance with the circumstances on various roads. It is also possible to give the driver motivation to continue driving safely.

### BRIEF DESCRIPTION OF THE DRAWINGS

FIG. 1 is a block diagram that shows a navigation device according to an embodiment;
FIG. 2 is a figure that shows an example of high-accident location data;
FIG. 3 is a format diagram that shows an example of a vehicle operation diagnosis determination table;
FIGS. 4A and 4B show a flowchart of a vehicle operation diagnosis processing program according to the embodiment;
FIG. 5 is a figure that shows an example of a curve that includes a high-accident location for which a person or vehicle suddenly coming out from the side is an accident factor;
FIG. 6 is a figure that shows an example of a curve that includes a high-accident location for which excessive speed when entering the curve is an accident factor;
FIG. 7 is a figure that shows an example of a curve that includes a high-accident location for which a collision with a stopped vehicle after traversing the curve is an accident factor;
FIG. 8 is a figure that shows a diagnosis result guidance screen that is displayed on a liquid crystal display;
FIG. 9 is a figure that shows a modified example of driving diagnosis judgment standards;
FIG. 10 is a figure that shows another modified example of the driving diagnosis judgment standards; and
FIG. 11 is a figure that shows yet another modified example of the driving diagnosis judgment standards.

### DETAILED DESCRIPTION OF THE EMBODIMENTS

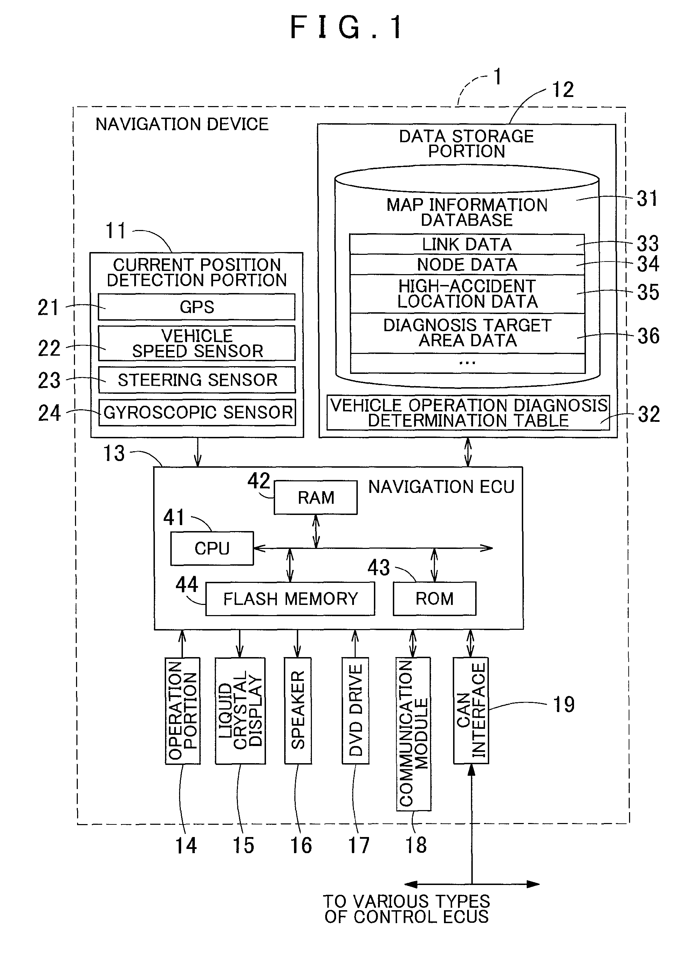

Hereinafter, a vehicle operation diagnosis device according to the present invention will be explained in detail with reference to the drawings, based on an embodiment that is implemented in a navigation device. First, a schematic configuration of a navigation device 1 according to the present embodiment will be explained using FIG. 1. FIG. 1 is a block diagram that shows the navigation device 1 according to the present embodiment.

As shown in FIG. 1, the navigation device 1 is configured from a current position detection portion 11, a data storage portion 12, a navigation ECU 13, an operation portion 14, a liquid crystal display 15, a speaker 16, a DVD drive 17, a communication module 18, and a controller area network (CAN) interface 19. The current position detection portion 11 detects the current position of a vehicle. The data storage portion 12 stores various types of data. The navigation ECU 13 (a factor acquisition unit, a diagnosis judgment standard modification unit, a parameter acquisition unit, a vehicle operation diagnosis unit, a diagnosis result guidance unit) performs various types of computational processing based on information that is input. The operation portion 14 accepts an operation from a user. The liquid crystal display 15 displays for the user a map and various types of information that pertain to guidance and the like for the result of the diagnosis of a driver's operation of the vehicle. The speaker 16 outputs voice guidance that is related to route guidance. The DVD drive 17 reads a DVD that is a storage medium in which a program is stored. The communication module 18 performs communication with an information center such as a traffic information center or the like.

Hereinafter, the various configuring elements that configure the navigation device 1 will be explained in order.
The current position detection portion 11 includes a GPS 21, a vehicle speed sensor 22, a steering sensor 23, a gyroscopic sensor 24, an altimeter (not shown in the drawings), and the like, and it is capable of detecting the current position and heading of the vehicle, the travel speed of the vehicle, and the like. The vehicle speed sensor 22, in particular, is a sensor for detecting the vehicle speed and the distance that the vehicle travels. The vehicle speed sensor 22 generates pulses in accordance with the revolution of a wheel of the vehicle and outputs a pulse signal to the navigation ECU 13. The navigation ECU 13 then computes the revolution speed of the wheel and the distance that the vehicle travels by counting the generated pulses. Note that it is not necessary for the navigation device 1 to be provided with all of the four types of sensors that are described above, and that the navigation device 1 may also be configured such that it is provided with as few as one type of sensor.

The data storage portion 12 is provided with a hard disk (not shown in the drawings) that serves as an external storage device and a storage medium, and with a read-write head (not shown in the drawings) serving as a drive for reading a map information database DB31, a vehicle operation diagnosis determination table 32, a specified program, and the like that are stored on the hard disk, as well as for writing specified data to the hard disk.

Various types of map data that are required for route guidance, traffic information guidance, and map displays are stored in the map information database DB31.
The map data are specifically configured from link data 33 that pertain to the shapes of roads (links), node data 34 that pertain to node points, high-accident location data 35 that pertain to high-accident locations, diagnosis target area data 36 that specify diagnosis target areas, POI data that provide information pertaining to locations such as facilities and the like, intersection data that pertain to various intersections, search data for searching for a route, search data for searching for a location, image drawing data for drawing images of maps, roads, traffic information, and the like on the liquid crystal display 15, and the like.

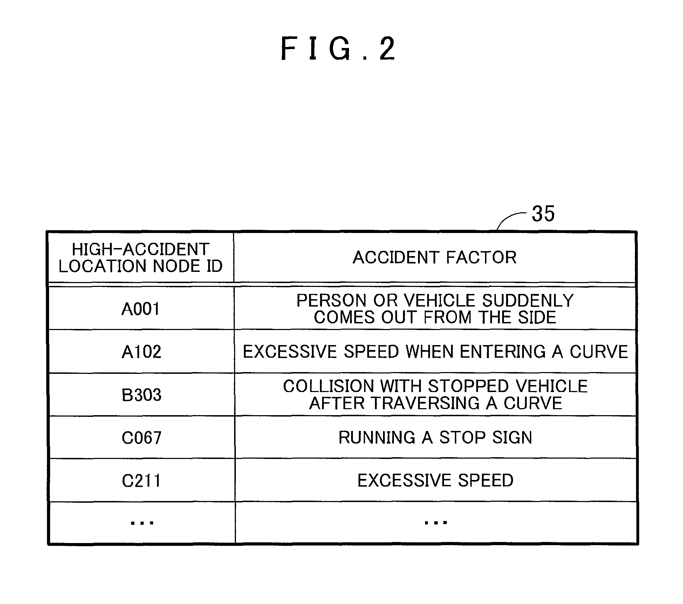

The high-accident location data 35 are data that pertain to high-accident locations where the number of accidents that have occurred in the past is not less than a specified number or not less than a specified number within a specified period in the past. Specifically, the high-accident location data 35 for each high-accident location are configured from the position of the high-accident location (specified by a node point) and an accident factor. Note that the accident factor that is stored in the high-accident location data 35 is the accident factor that accounts for the highest percentage among all of the factors for all of the accidents that have occurred at the high-accident location in the past. FIG. 2 is a figure that shows an example of the high-accident location data 35 that is stored in the map information database DB31. In the example that is shown in FIG. 2, there is a high-accident location at a node with the ID A001, and the accident factor that is stored for that location is "a person or vehicle suddenly coming out from the side". There is also a high-accident location at a node with the ID A102, and the accident factor that is stored for that location is "excessive speed when entering the curve". The positions and the accident factors are stored in the same manner for each of the high-accident locations that exist on the map.

The diagnosis target area data 36 are data that specify areas (hereinafter called the diagnosis target areas) for which processing (hereinafter called the vehicle operation diagnosis processing) is performed that diagnoses whether or not a vehicle operation that the driver performs while driving is appropriate in terms of safety. As will be described later, the vehicle operation diagnosis processing is executed in a case where the vehicle is located in a diagnosis target area. Note that the diagnosis target area may be, for example, an intersection, a merging road, a curve, a tunnel, or the like. Note also that the diagnosis target area is specified by a link ID or the like.
Note that the map information database DB31 is updated based on one of update data that are distributed from a map distribution center or the like and update data that are provided through a storage medium (for example, a DVD or a memory card).

The vehicle operation diagnosis determination table 32 is a table that, when the vehicle operation diagnosis processing is executed, is used for diagnosing whether or not a vehicle operation that the driver performs while driving is appropriate in terms of safety. A plurality of diagnosis items, driving diagnosis judgment standards, diagnosis results, and the content of guidance that is provided based on the diagnosis result are stored in association with one another in the vehicle operation diagnosis determination table 32.
In the vehicle operation diagnosis processing, the navigation ECU 13 compares a vehicle parameter with the driving diagnosis judgment standards that are set for each of the diagnosis items, then determines the diagnosis result based on whether or not the vehicle parameter meets the driving diagnosis judgment standards. The navigation ECU 13 then provides guidance in the form of a message that corresponds to the determined diagnosis result. As will be described later, in a case where a high-accident location is included in the diagnosis target area for which the diagnosis is performed, a driving diagnosis judgment standard that includes a threshold value is modified based on the accident factor for the high-accident location.

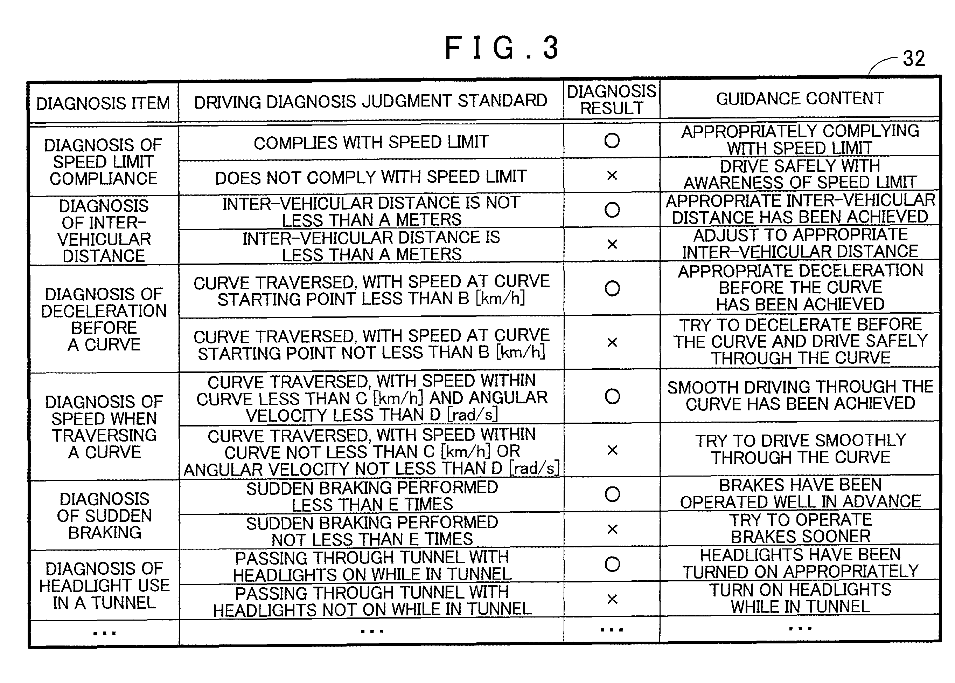

Hereinafter, the vehicle operation diagnosis processing will be explained using FIG. 3 and a plurality of examples. FIG. 3 is a figure that shows an example of the vehicle operation diagnosis determination table 32.

As shown in FIG. 3, in a case where the vehicle is traveling within a diagnosis target area on a section of road for which a speed limit is set, for example, if the speed of the vehicle is not greater than the speed limit, the navigation ECU 13 diagnoses that the vehicle is being driven safely and provides guidance saying that the driver is appropriately complying with the speed limit so as to evaluate the driving as safe. In contrast, in a case where the speed of the vehicle has exceeded the speed limit, the navigation ECU 13 diagnoses that the vehicle is not being driven safely and provides guidance telling the driver to drive safely with awareness of the speed limit, in order to encourage safe driving.

In a case where there is a vehicle that is traveling ahead of the driver's own vehicle within the diagnosis target area and the inter-vehicular distance between the driver's own vehicle and the vehicle ahead is not less than a threshold value of A (meters), the navigation ECU 13 diagnoses that the vehicle is being driven safely and provides guidance saying that an appropriate inter-vehicular distance has been achieved so as to evaluate the driving as safe. In contrast, in a case where the inter-vehicular distance between the driver's own vehicle and the vehicle ahead is less than the threshold value of A (meters), the navigation ECU 13 diagnoses that the vehicle is not being driven safely and provides guidance telling the driver to adjust to an appropriate inter-vehicular distance, in order to encourage safe driving.

In a case where the vehicle is traversing a curve that is a diagnosis target area and the speed of the vehicle at the starting point of the curve was less than a threshold value of B (km/h), the navigation ECU 13 diagnoses that the vehicle is being driven safely and provides guidance saying that appropriate deceleration before the curve has been achieved so as to evaluate the driving as safe. In contrast, in a case where the speed of the vehicle at the starting point of the curve was not less than the threshold value of B (km/h), the navigation ECU 13 diagnoses that the vehicle is not being driven safely and provides guidance telling the driver to try to decelerate before the curve and drive safely through the curve, in order to encourage safe driving.

In a case where the vehicle is traversing a curve that is a diagnosis target area and the speed of the vehicle within the curve is less than a threshold value of C (km/h), while the angular velocity is less than a threshold value D (rad/s), the navigation ECU 13 diagnoses that the vehicle is being driven safely and provides guidance saying that smooth driving through the curve has been achieved so as to evaluate the driving as safe. In contrast, in a case where either the speed of the vehicle within the curve is not less than the threshold value of C (km/h) or the angular velocity is not less than the threshold value D (rad/s), the navigation ECU 13 diagnoses that the vehicle is not being driven safely and provides guidance telling the driver to try to drive smoothly through the curve, in order to encourage safe driving.

In a case where the number of times that the vehicle has been braked suddenly in the diagnosis target area is less than E times, the navigation ECU 13 diagnoses that the vehicle is being driven safely and provides guidance saying that the brakes have been operated well in advance so as to evaluate the driving as safe. In contrast, in a case where the number of times that the vehicle has been braked suddenly in the diagnosis target area is not less than E times, the navigation ECU 13 diagnoses that the vehicle is not being driven safely and provides guidance telling the driver to try to operate the brakes sooner, in order to encourage safe driving.

In a case where the vehicle is passing through a tunnel that is a diagnosis target area and the vehicle's headlights are on while it is in the tunnel, the navigation ECU 13 diagnoses that the vehicle is being driven safely and provides guidance saying that the headlights have been turned on appropriately so as to evaluate the driving as safe. In contrast, in a case where the headlights are not on while the vehicle is in the tunnel, the navigation ECU 13 diagnoses that the vehicle is not being driven safely and provides guidance telling the driver to turn on the headlights while in the tunnel, in order to encourage safe driving.
Note that in the vehicle operation diagnosis processing, a diagnosis of deceleration before a temporary stop line is reached, a diagnosis of seat belt use, and the like are also performed, although explanations of these diagnoses will be omitted. Note also that, in a case where a high-accident location is included in the diagnosis target area for which the diagnosis is performed, the threshold values A to E that are described above are changed to more readily attainable values based on the accident factor for the high-accident location.

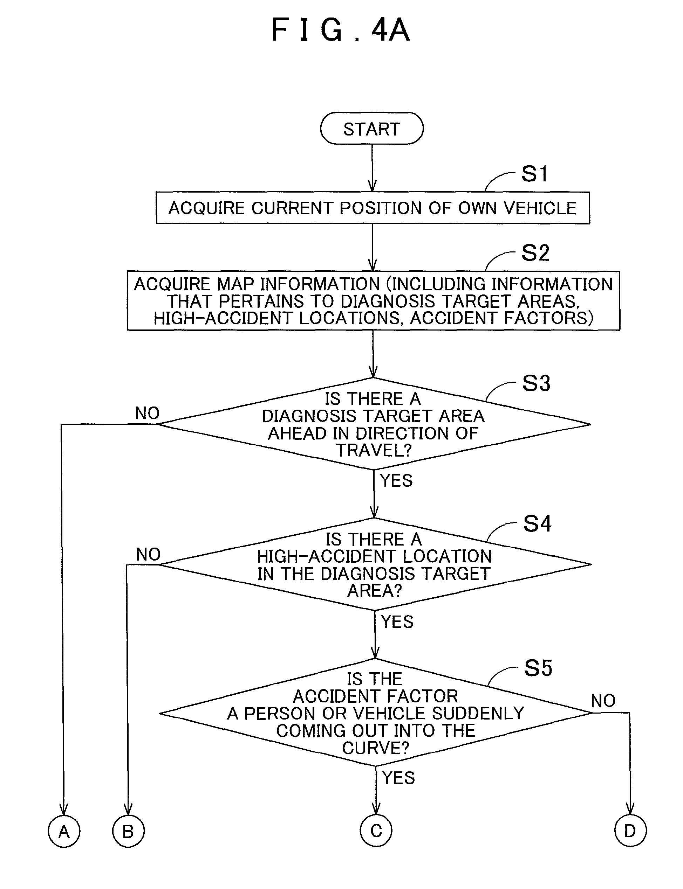

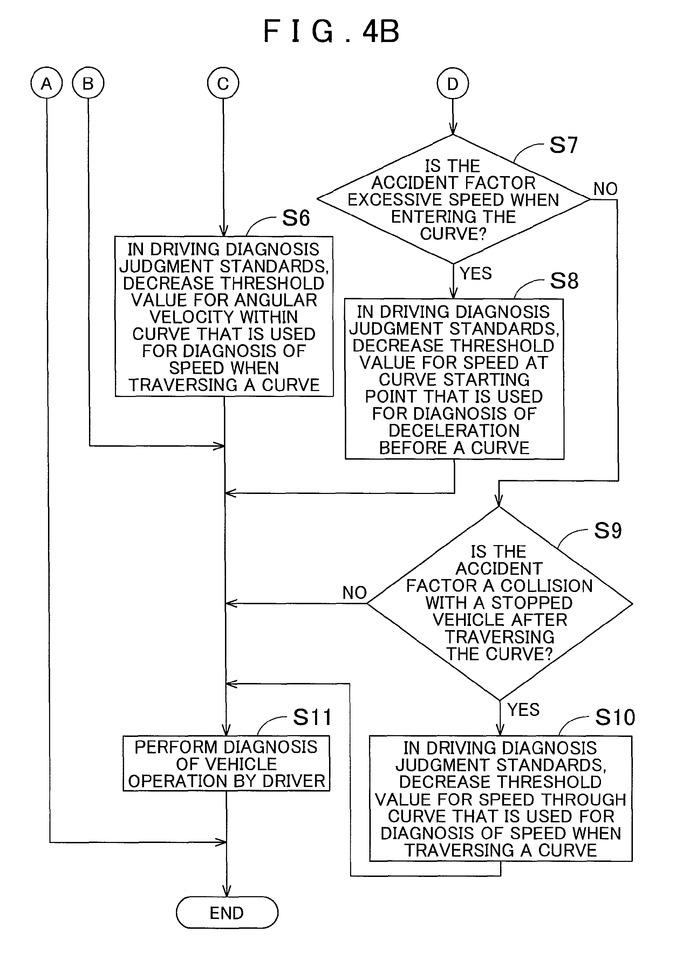

The navigation ECU 13 is an electronic control unit that performs overall control of the navigation device 1 by executing guidance route setting processing that, in a case where a destination has been selected, sets a guidance route from the current position to the destination, the vehicle operation diagnosis processing that diagnoses whether or not a vehicle operation that the driver performs while driving is appropriate in terms of safety, and the like. The navigation ECU 13 is provided with a CPU 41 that serves as a computing device and a control device, as well as with internal storage devices such as a RAM 42, a ROM 43, a flash memory 44, and the like. The RAM 42 is used as a working memory when the CPU 41 executes various types of computational processing, and it also stores route data and the like when a search for a route is conducted. A control program, a vehicle operation diagnosis processing program (refer to FIGS. 4A and 4B), and the like are stored in the ROM 43. The flash memory 44 stores a program that is read from the ROM 43.

The operation portion 14 is operated when a departure point is input as a driving start point and when a destination is input as a driving end point, and it is configured from a plurality of operation switches (not shown in the drawings), such as various types of keys, buttons, and the like. Based on switch signals that are output by pressing or otherwise operating the various switches, the navigation ECU 13 performs control such that the corresponding types of operations are executed. Note that the operation portion 14 can also be configured as a touch panel that is provided on the front face of the liquid crystal display 15.

A map image that includes a road, traffic information, operation guidance, an operation menu, key guidance, the guidance route from the departure point to the destination, guidance information along the guidance route, news, a weather forecast, the time, e-mail, a television program, and the like are also displayed on the liquid crystal display 15. In a case where the diagnosis of the driver's operation of the vehicle has been performed, the diagnosis result is also displayed.

The speaker 16, based on a command from the navigation ECU 13, outputs voice guidance that guides driving along the guidance route and traffic information guidance. In a case where the diagnosis of the driver's operation of the vehicle has been performed, the speaker 16 provides voice guidance regarding the diagnosis result.

The DVD drive 17 is a drive that is capable of reading data that are stored in a storage medium such as a DVD, a CD, or the like. An update of the map information database DB31 and the like are performed based on the data that are read.

The communication module 18 is a communication device for receiving traffic information that includes various types of information, such as congestion information, regulation information, traffic accident information, and the like, and that is transmitted from a traffic information center, such as a Vehicle Information and Communication System (VICS (registered trademark)) center, a probe center, or the like, for example. The communication module 18 is equivalent to a mobile telephone and a DCM, for example.

The CAN interface 19 is an interface that executes input and output of data in relation to a CAN, which is an in-vehicle network for carrying out multiplex communications among various types of control ECUs that are installed in the vehicle. Through the CAN, the navigation ECU 13 is connected, in such a way that mutual communication is possible, to various types of control ECUs that control the vehicle (for example, a brake control ECU, a seat belt control ECU 51, a millimeter wave radar control ECU, a headlight control ECU, and the like). The navigation ECU 13 also performs the diagnosis of the driver's operation of the vehicle, which is described later, based on various parameters (the accelerator angle, a seat belt being fastened or not, the inter-vehicular distance to the vehicle ahead, the headlights being on or not, and the like) that are acquired from the various types of ECUs through the CAN.

Next, the vehicle operation diagnosis processing program that is executed in the navigation device 1 that has the configuration that is described above will be explained based on FIGS. 4A and 4B. FIGS. 4A and 4B show a flowchart of the vehicle operation diagnosis processing program according to the present embodiment. The vehicle operation diagnosis processing program is a program that is executed at specified time intervals (for example, once every 200 msec) after the vehicle's adaptive cruise control is turned on, and it diagnoses whether or not a vehicle operation that the driver performs while driving is appropriate in terms of safety. Note that the program that is shown in the flowchart in FIGS. 4A and 4B is stored in the RAM 42, the ROM 43, or the like that are provided in the navigation ECU 13, and is executed by the CPU 41.
Note also that in the explanation that follows, an example will be explained of a case in which the vehicle is specifically traversing a curve that serves as a diagnosis target area.

In the vehicle operation diagnosis processing program, first, at step (hereinafter abbreviated as S) 1, the CPU 41 acquires the current position of the vehicle based on the detection result from the current position detection portion 11.

Next, at S2, the CPU 41 reads from the map information database DB31 the map information for the area surrounding the current position of the vehicle that was acquired at S1. Note that the map information that is read includes the high-accident location data 35 (refer to FIG. 2) and the diagnosis target area data 36, in addition to the link data 33 and the node data 34. The CPU 41 also performs map matching that specifies the current position of the vehicle on a link, based on the acquired current position of the vehicle and on the map information that is stored in the map information database DB31.

Next, at S3, the CPU 41 determines whether or not there is a diagnosis target area ahead in the direction in which the vehicle is traveling, based on the map information that was acquired at S2. Note that the diagnosis target area may be, for example, an intersection, a merging road, a curve, a tunnel, or the like. Note also that in the present embodiment, the diagnosis target areas are stored in the map information database DB31 in advance, but the vehicle operation diagnosis processing program may also be configured such that the navigation ECU 13 determines whether or not there is a diagnosis target area ahead in the direction of travel based on the shape of the link or the like.

In a case where it is determined that there is a diagnosis target area ahead in the direction of travel (YES at S3), the processing advances to S4. In contrast, in a case where it is determined that there is no diagnosis target area ahead in the direction in which the vehicle is traveling (NO at S3), the vehicle operation diagnosis processing program is terminated without performing the diagnosis of the driver's vehicle operation.

At S4, based on the map information that was acquired at S2, the CPU 41 determines whether or not a high-accident location is included in the diagnosis target area that lies ahead in the direction in which the vehicle is traveling. Note that a high-accident location is a location where the number of accidents that have occurred in the past is not less than a specified number or not less than a specified number within a specified period in the past.

In a case where it is determined that a high-accident location is included in the diagnosis target area that lies ahead in the direction in which the vehicle is traveling (YES at S4), the processing advances to S5. In contrast, in a case where it is determined that a high-accident location is not included in the diagnosis target area that lies ahead in the direction in which the vehicle is traveling (NO at S4), the processing advances to S11.

At S5, the CPU 41 refers to the accident factor for the high-accident location that is included in the diagnosis target area and determines whether or not the diagnosis target area is a curve and whether or not the accident factor is a person or vehicle suddenly coming out from the side. In a case where it is determined that the accident factor is a person or vehicle suddenly coming out from the side (YES at S5), the processing advances to S6. In contrast, in a case where it is determined that the accident factor is a factor other than a person or vehicle suddenly coming out from the side (NO at S5), the processing advances to S7.

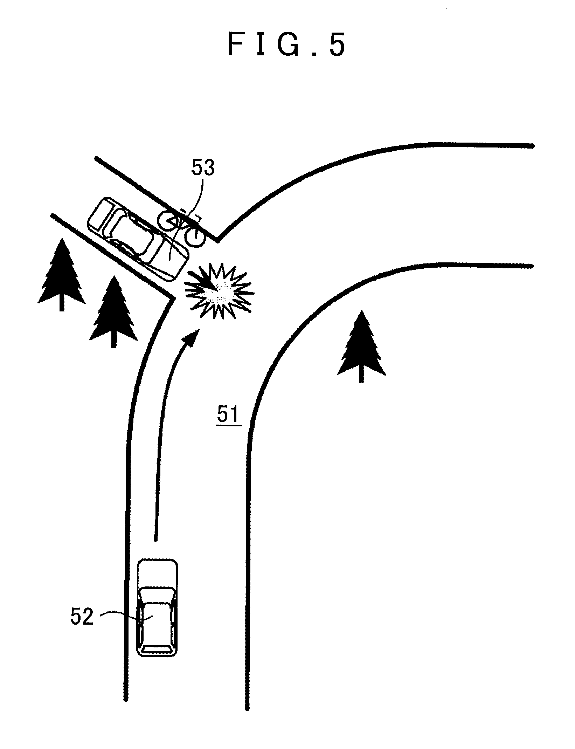

At S6, in the diagnosis items that are stored in the vehicle operation diagnosis determination table 32, the CPU 41 decreases (that is, changes to a more readily attainable value) the threshold value (D in FIG. 3) for the angular velocity when the vehicle traverses the curve, which is used as the driving diagnosis judgment standard for a diagnosis of the speed of the vehicle when it traverses the curve. This makes it possible to take the driving diagnosis judgment standard for the angular velocity when the vehicle traverses the curve and make it more stringent than usual in a case like that shown in FIG. 5, where a vehicle 52 is traversing a dangerous curve 51 where there is a strong possibility that a person or another vehicle 53 will suddenly come out from the side at a T-intersection within the curve where the visibility is poor. This in turn makes it possible, in the diagnosis processing at S11, which is described later, to encourage safe driving more strongly in a dangerous area, because if the angular velocity when the vehicle traverses the curve is not lower than usual, a diagnosis result that the vehicle is being driven safely will not be produced.

In contrast, at S7, the CPU 41 refers to the accident factor for the high-accident location that is included in the diagnosis target area and determines whether or not the diagnosis target area is a curve and whether or not the accident factor is excessive speed when entering the curve. In a case where it is determined that the accident factor is excessive speed when entering the curve (YES at S7), the processing advances to S8. In contrast, in a case where it is determined that the accident factor is a factor other than excessive speed when entering the curve (NO at S7), the processing advances to S9.

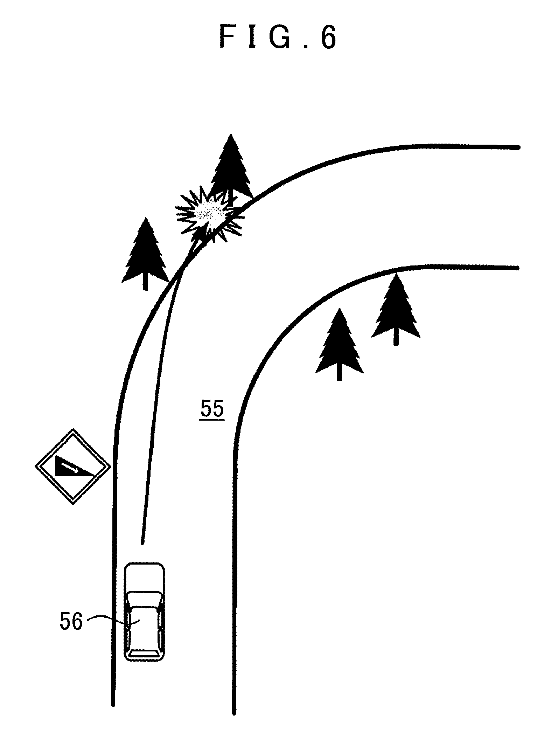

At S8, in the diagnosis items that are stored in the vehicle operation diagnosis determination table 32, the CPU 41 decreases (that is, changes to a more readily attainable value) the threshold value (B in FIG. 3) for the vehicle speed at the starting point of the curve, which is used as the driving diagnosis judgment standard for a diagnosis of the vehicle's deceleration before the curve. This makes it possible to take the driving diagnosis judgment standard for the vehicle's deceleration before the curve and make it more stringent than usual in a case like that shown in FIG. 6, where a vehicle 56 is traversing a curve 55 that is a sharp curve on a downhill grade where vehicles have often run off the road because they have not turned sufficiently. This in turn makes it possible, in the diagnosis processing at S11, which is described later, to encourage safe driving more strongly in a dangerous area, because if the vehicle speed at the starting point of the curve is not lower than usual, a diagnosis result that the vehicle is being driven safely will not be produced.

In contrast, at S9, the CPU 41 refers to the accident factor for the high-accident location that is included in the diagnosis target area and determines whether or not the diagnosis target area is a curve and whether or not the accident factor is a collision with a stopped vehicle after traversing the curve. In a case where it is determined that the accident factor is a collision with a stopped vehicle after traversing the curve (YES at S9), the processing advances to S10. In contrast, in a case where it is determined that the accident factor is a factor other than a collision with a stopped vehicle after traversing the curve (NO at S9), the processing advances to S11.

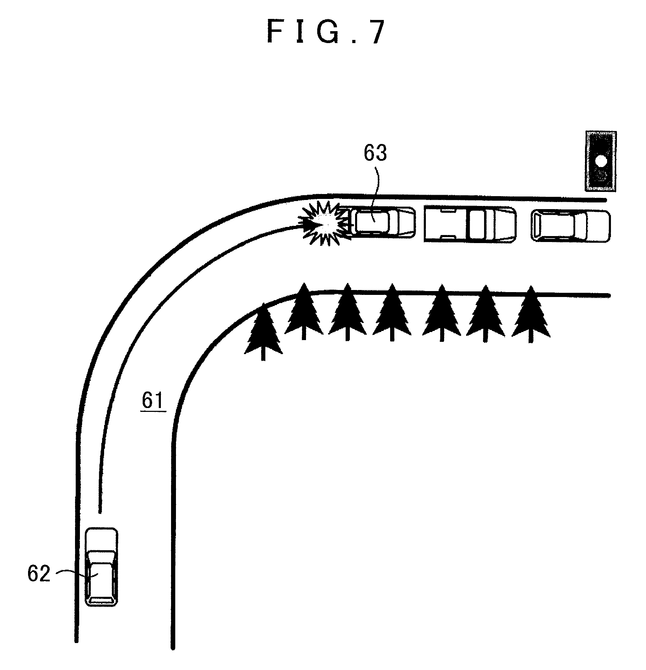

At S10, in the diagnosis items that are stored in the vehicle operation diagnosis determination table 32, the CPU 41 decreases (that is, changes to a more readily attainable value) the threshold value (C in FIG. 3) for the vehicle speed when the vehicle traverses the curve, which is used as the driving diagnosis judgment standard for a diagnosis of the speed of the vehicle when it traverses the curve. This makes it possible to take the driving diagnosis judgment standard for the vehicle's speed when it traverses the curve and make it more stringent than usual in a case like that shown in FIG. 7, where a vehicle 62 traverses a dangerous curve 61 that is a curve with poor visibility and a traffic signal located after the curve, and where there is a strong possibility of a collision with another vehicle 63 that is stopped waiting for the signal. This in turn makes it possible, in the diagnosis processing at S11, which is described later, to encourage safe driving more strongly in a dangerous area, because if the speed of the vehicle when it traverses the curve is not lower than usual, a diagnosis result that the vehicle is being driven safely will not be produced.

Next, at S11, the CPU 41 performs the diagnosis of the driver's operation of the vehicle. In concrete terms, the CPU 41 first acquires, through the CAN and from various types of sensors such as the vehicle speed sensor 22, the steering sensor 23, the gyroscopic sensor 24, and the like, various parameters for the vehicle that is traveling through the diagnosis target area (specifically, the vehicle speed, the angular velocity, the inter-vehicular distance, the amount of braking, and the like). Next, the CPU 41 compares the acquired vehicle parameters with the driving diagnosis judgment standards that are set for each of the diagnosis items that are stored in the vehicle operation diagnosis determination table 32 (FIG. 3), then determines the diagnosis result based on whether or not the vehicle parameters for each of the diagnosis items meet the driving diagnosis judgment standards that have been set. Note that in a case where any one of the threshold values for the driving diagnosis judgment standards has been modified at S6, S8, or S10, the modified driving diagnosis judgment standard is used. The CPU 41 then uses the liquid crystal display 15 and the speaker 16 to provide guidance in the form of a message that corresponds to the diagnosis result that has been determined.

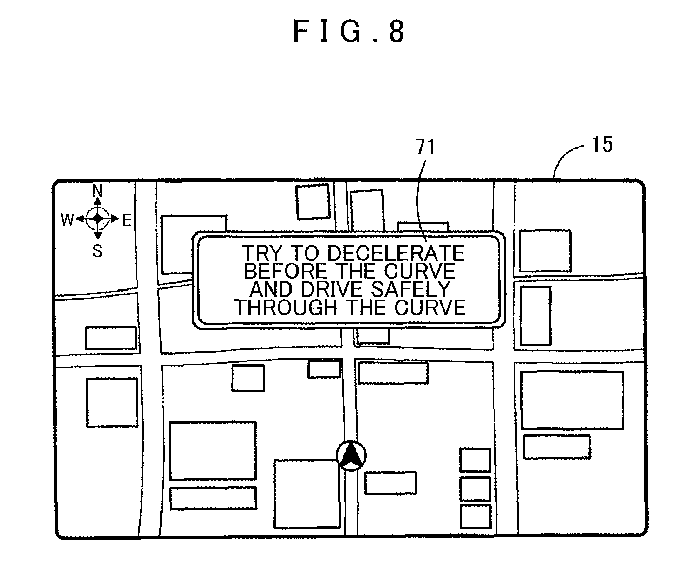

FIG. 8 is a figure that shows a diagnosis result guidance screen that is displayed on the liquid crystal display 15 at S 11. Note that the example that is shown in FIG. 8 shows the guidance that is provided for the diagnosis result in a case where the vehicle is traversing a curve that is a diagnosis target area and the vehicle speed at the starting point of the curve is not less than the threshold value of B (km/h). In a case where the vehicle speed at the starting point of the curve is not less than the threshold value of B (km/h), the navigation ECU 13 diagnoses that the vehicle is not being driven safely. Then, in order to encourage safe driving, the navigation ECU 13 displays the message "Try to decelerate before the curve and drive safely through the curve" in a window 71 that is disposed on the map screen. Thus it is possible to encourage the driver to drive safely when traversing the curve in the future.
Note that any of the threshold values for the driving diagnosis judgment standards that have been modified at S6, S8, and S10 are returned to their original values when the diagnosis processing at S11 ends.

As described in detail above, in a case where there is a diagnosis target area ahead in the direction in which the vehicle is traveling and a high-accident location is included in the diagnosis target area, the navigation device 1 according to the present embodiment, in accordance with a method by which the navigation device 1 diagnoses vehicle operation, and in accordance with the computer program that is executed by the navigation ECU 13 of the navigation device 1, modifies the driving diagnosis judgment standards based on the accident factors for the high-accident location (S6, S8, S10) and diagnoses whether or not a vehicle operation that the driver performs while driving is appropriate in terms of safety (S11), based on the modified driving diagnosis judgment standards. It is therefore possible to cause the driver to perform highly safe vehicle operation in accordance with the circumstances on various roads. It is also possible to give the driver motivation to continue driving safely.
Furthermore, because the driving diagnosis judgment standards are modified by changing the threshold values for the parameters that are related to the accident factors, it is possible, for example, to facilitate the determination of a strict diagnosis result with respect to a vehicle operation to which particular attention should be paid while driving on various roads, and it is also possible to guide the driver toward a vehicle operation that will prevent something from occurring that might become an accident factor.
In addition, in a case where the driving diagnosis judgment standards are modified, the threshold values for the parameters that are related to the accident factors for the high-accident location are changed to values that are more readily attainable than the values in a case where the vehicle is not traveling in a high-accident location. This makes it more likely that a strict diagnosis result will be determined for a dangerous area that includes a high-accident location, making it possible to encourage the driver more strongly to drive safely.
Moreover, because the diagnosis result is provided as guidance to the driver through the liquid crystal display 15 and the speaker 16, it is possible to make the driver more conscious of highly safe vehicle operation and to give the driver motivation to continue driving safely.

Note that the present invention is not limited to the embodiment that is described above, and it is obvious that various improvements and modifications can be made within the scope of the present invention.
For example, in the present embodiment, every time the vehicle travels through a diagnosis target area, the guidance is provided for the diagnosis result in the diagnosis target area where the vehicle is traveling, but a configuration may also be used in which the diagnosis results are counted and the guidance is provided for the diagnosis results at the point when the count reaches a specified value. For example, the configuration may be such that, in the diagnosis of speed limit compliance that is shown in FIG. 3, the times that the driver does not comply with the speed limit are counted every time the vehicle travels through a diagnosis target area, and at the point when the count reaches a specified value (for example, 5), guidance is provided in the form of a message that says, "Drive safely with awareness of the speed limit."

In the present embodiment, one accident factor is stored in association with one high-accident location, but it is also acceptable for a plurality of accident factors to be stored in association with one high-accident location. In this case, the configuration may also be such that the threshold values for the driving diagnosis judgment standards that are related to all of the associated accident factors are modified, for example.

In the present embodiment, the accident factor that is stored in association with a high-accident location is the accident factor that has the highest percentage among all of the factors for that high-accident location, but it is also acceptable for all of the accident factors that have occurred at that location in the past to be stored in association with the location. In this case, the configuration may also be such that the threshold values for the driving diagnosis judgment standards to be modified are related to accident factors that are selected from all of the associated accident factors based on the number or the ratio of occurrences, for example.

In the present embodiment, the configuration is such that the accident factors for each of the high-accident locations (FIG. 2) are stored in the map information database DB31, and the accident factors are acquired by being read from the map information database DB31, but a configuration may also be used in which the accident factors are acquired from an external center or the like.

In the present embodiment, the configuration is such that the diagnosis of the driver's vehicle operation is performed in a case where the vehicle is located within a diagnosis target area that is set in advance, but a configuration may also be used in which the diagnosis of the driver's vehicle operation is constantly performed by the vehicle operation diagnosis processing program (refer to FIGS. 4A and 4B) while the adaptive cruise control is on, without any diagnosis target areas being set.

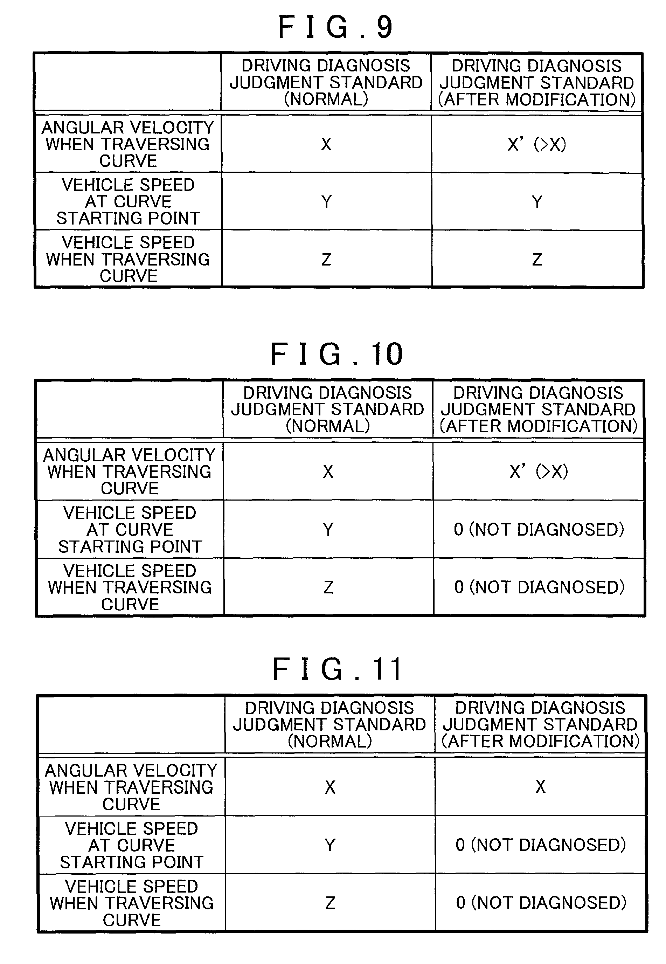

In the present embodiment, in a case where one of the threshold values for the driving diagnosis judgment standards that are related to the accident factors is modified at one of S6, S8, and S10, the diagnosis of the driver's vehicle operation with respect to the driving diagnosis judgment standard that has been modified is performed using the modified threshold value, as shown in FIG. 9. In the example that is shown in FIG. 9, a threshold value X for the angular velocity when the vehicle traverses the curve is used as the driving diagnosis judgment standard for a diagnosis of the speed of the vehicle when it traverses the curve. The threshold value X has been modified to a value of X', and the diagnosis of the driver's vehicle operation is performed using the modified threshold value X' as the driving diagnosis judgment standard, while normal threshold values (Y, Z) are used for other driving diagnosis judgment standards. However, the configurations (1) and (2) that are described below may also be used.
(1) The configuration is such that, in a case where one of the threshold values for the driving diagnosis judgment standards that are related to the accident factors has been modified at one of S6, S8, and S10, the diagnosis of the driver's vehicle operation with respect to the driving diagnosis judgment standard that has been modified is performed using the modified threshold value, as shown in FIG. 10. In the example that is shown in FIG. 10, the threshold value X for the angular velocity when the vehicle traverses the curve is used as the driving diagnosis judgment standard for the diagnosis of the speed of the vehicle when it traverses the curve. The threshold value X has been modified to a value of X', and the diagnosis of the driver's vehicle operation is performed using the modified threshold value X' as the driving diagnosis judgment standard. In contrast, the driving diagnosis judgment standards other than the driving diagnosis judgment standard that is related to the accident factor are changed to zero, and those driving diagnosis judgment standards are not used as the bases for the diagnosis of the driver's vehicle operation.
(2) The configuration is such that none of the threshold values for the driving diagnosis judgment standards that are related to the accident factors is modified at S6, S8, and S10. In the example that is shown in FIG. 11, the threshold value X for the angular velocity when the vehicle traverses the curve is used as the driving diagnosis judgment standard for the diagnosis of the speed of the vehicle when it traverses the curve. The threshold value X is not modified, and the diagnosis of the driver's vehicle operation is performed using the normal threshold value X as the driving diagnosis judgment standard. In contrast, the driving diagnosis judgment standards other than the driving diagnosis judgment standard that is related to the accident factor are changed to zero, and those driving diagnosis judgment standards are not used as the bases for the diagnosis of the driver's vehicle operation.

## Claims

1. A vehicle operation diagnosis device (1) that diagnoses a driver's operation of a vehicle (55) based on a vehicle parameter and a driving diagnosis judgment standard that is set for a diagnosis item, the vehicle operation diagnosis device being **characterized by** comprising:
a factor acquisition unit that acquires information that pertains to an accident factor for a high-accident location in the vicinity of the vehicle where not less than a specified number of accidents have occurred in the past;
a diagnosis judgment standard modification unit that, in a case where the vehicle is traveling in the high-accident location, modifies the driving diagnosis judgment standard based on the accident factor for the high-accident location;
a parameter acquisition unit (13) that acquires the vehicle parameter; and
a vehicle operation diagnosis unit (32) that diagnoses the driver's operation of the vehicle based on the driving diagnosis judgment standard that was modified by the diagnosis judgment standard modification unit and on the vehicle parameter that was acquired by the parameter acquisition unit.

2. The vehicle operation diagnosis device (1) according to claim 1, wherein
the driving diagnosis judgment standard is defined by a threshold value for a parameter that pertains to the vehicle,
the vehicle operation diagnosis unit diagnoses the driver's operation of the vehicle by comparing the vehicle parameter that was acquired by the parameter acquisition unit with the parameter threshold value that defines the driving diagnosis judgment standard, and
the diagnosis judgment standard modification unit changes a threshold value of a parameter that pertains to the accident factor for the high-accident location.

3. The vehicle operation diagnosis device (1) according to claim 2, wherein
the diagnosis judgment standard modification unit changes the threshold value of the parameter that pertains to the accident factor for the high-accident location to a value that is more readily attainable than the value in a case where the vehicle is not traveling in a high-accident location.

4. The vehicle operation diagnosis device (1) according to any one of claims 1 to 3, further comprising:
a diagnosis result guidance unit that provides guidance with respect to a result of the diagnosis of the driver's operation of the vehicle by the vehicle operation diagnosis unit.

5. A vehicle operation diagnosis method that diagnoses a driver's operation of a vehicle based on a vehicle parameter and a driving diagnosis judgment standard that is set for a diagnosis item, the vehicle operation diagnosis method being **characterized by** comprising the steps of:
acquiring information that pertains to an accident factor for a high-accident location in the vicinity of the vehicle where not less than a specified number of accidents have occurred in the past;
modifying the driving diagnosis judgment standard based on the accident factor for the high-accident location, in a case where the vehicle is traveling in the high-accident location;
acquiring the vehicle parameter; and
diagnosing the driver's operation of the vehicle based on the modified driving diagnosis judgment standard and the acquired vehicle parameter.

6. A computer program that is installed in a computer and that diagnoses a driver's operation of a vehicle based on a vehicle parameter and a driving diagnosis judgment standard that is set for a diagnosis item, the computer program being **characterized by** causing the computer to perform the functions of:
acquiring information that pertains to an accident factor for a high-accident location in the vicinity of the vehicle where not less than a specified number of accidents have occurred in the past;
modifying the driving diagnosis judgment standard based on the accident factor for the high-accident location, in a case where the vehicle is traveling in the high-accident location;
acquiring the vehicle parameter; and
diagnosing the driver's operation of the vehicle based on the modified driving diagnosis judgment standard and the acquired vehicle parameter.
